# EUROPEAN PATENT APPLICATION

(11) **EP 2 796 355 A1**
(43) Date of publication of application: **29.10.2014**
(21) Application number: 12869659.8
(22) Date of filing: 23.03.2012
(51) Int. Cl.: B62K 17/00, A63C 17/00, B62M 1/00

(54) **REINFORCED SCOOTER FOLDING DEVICE**

(30) Priority: 29.02.2012 CN 201220070933 U
(71) Applicant: Zhongshan Wanhao Sports Products Co. Ltd., Guangdong 528425 (CN)
(72) Inventor: DU, Qiming, Zhongshan Guangdong 528425 (CN)
(74) Representative: Decamps, Alain René François
(86) International application number: PCT/CN2012/072865
(87) International publication number: WO 2013/127109

(57) **Abstract**

This utility model discloses a reinforced scooter folding device which comprises an extension pipe mechanism. Both ends of the extension pipe mechanism are articulated with the baseboard and the head pipe of the scooter, respectively; the baseboard is articulated with the head pipe so that the baseboard, the head pipe and the extension pipe mechanism form a triangle; a locating mechanism is arranged on the extension pipe mechanism, by which the fixed pipe and the extension pipe can be located to unfolded state and folded state, respectively. So, the scooter can be folded or unfolded correspondingly. It is convenient to carry. Besides, it is convenient and fast to unfold and fold the scooter. A safe locking device is also mounted on the extension pipe mechanism. When the ball components fail under the unfolded state, the safe locking device can make sure the scooter will not retract and fold immediately. Therefore, the folding device is safer and more reliable.

## Description

### Technological field

This utility model relates to a reinforced scooter folding device.

### Background technology

The head and the baseboard of the traditional scooter are fixedly connected. Such scooter owns firm structure and high safety, but it takes up much space if not used. It is not easy to store. Besides, it is inconvenient to carry. Although there are some foldable scooters on the market, the structure of the folding device is too complex, with cumbersome operations as well as low safety and reliability.

### Contents of invention

To overcome shortcomings of the prior art, this utility model provides a reinforced scooter folding device. The folding device is simple and easy in operations, safe and reliable.

To solve technical problems, this utility model adopts the following technical scheme:

This utility model relates to a reinforced scooter folding device which is characterized by comprising an extension pipe mechanism; one end of the extension pipe mechanism is articulated with the middle and lower part of the head pipe; the other end of the extension pipe mechanism is articulated with the middle and upper part of the baseboard of the scooter; the lower part of the head pipe of the scooter is articulated with the front part of the baseboard. Thus, the extension pipe mechanism, the head pipe and the baseboard are articulated mutually to form a triangle. The extension pipe mechanism comprises a fixed pipe and an extension pipe cased in the fixed pipe; the extension pipe can axially slide along the fixed pipe; a locating mechanism which can locate the fixed pipe and the extension pipe in the unfolded state and folded state respectively is mounted on the extension pipe mechanism; a safe locking device which can facilitate the fixed pipe and the extension pipe in the unfolded state is arranged on the extension pipe mechanism.

The locating mechanism comprises two groups of the ball components mounted on the side of the extension pipe; the two groups of the ball components are distributed axially on the side of the extension pipe and have certain space.

The ball components comprise a reset spring and balls at both sides of the extension pipe; locating holes corresponding to the ball components are arranged at both sides of the fixed pipe; ball holes for corresponding balls to extend are arranged at both sides of the extension pipe so that the balls can slide off and get stuck in the locating holes of the fixed pipe.

The reset spring is installed in the extension pipe; both sides press the rear end face of two balls, respectively; when the extension pipe slides to the location where the balls correspond to the locating holes, the balls will automatically get stuck in the locating holes due to the elastic force of the reset spring.

The fixed pipe is provided with a button on the locating holes; when the balls slide into the locating holes, press down the button and the balls can slide off the locating holes.

The safe locking device comprises a safe ball component mounted on the upside of the extension pipe; the safe ball component comprises a locking spring and a safe ball in the extension pipe; a safe ball hole for the safe ball to extend is arranged on the upside of the extension pipe; one end of the locking spring presses the inner wall of the extension pipe, and the other end presses the tail of the safe ball; a slideway corresponding to the safe ball is arranged on the upside of the fixed pipe; when the extension pipe mechanism extends to certain length, the safe ball can slide off the safe ball hole to the slideway; when the fixed pipe and the extension pipe are in the unfolded state, there is certain distance between the safe ball hole and the bottom of the slideway.

The fixed pipe is provided with a safe button on the slideway; when the safe ball slides into the slideway, press down the safe button and the safe ball can slide off the slideway.

The head of the balls and the safe ball is of hemispheric structure, and the tail is equipped with an annular ladder fixture block.

A locating convex block is arranged at the hinge joint between the head pipe and the baseboard; a locating screw corresponding to the locating convex block is arranged on the baseboard; when the extension pipe extends to the location in need of extension, one end of the locating screw presses the end face of the locating convex block.

The utility model has the following advantages: the baseboard of the scooter is articulated with the head pipe; an extension pipe mechanism is articulated between the baseboard and the head pipe; thus, the baseboard, the head pipe and the extension pipe mechanism form a triangle; the side where the extension pipe mechanism is located is transformable, so when the extension pipe shortens or extends, the scooter can be folded or unfolded correspondingly; it is convenient to carry; the extension pipe mechanism coordinates with the length of locating extension through the ball components installed on the extension pipe and the locating holes arranged on the fixed pipe; when the ball components of the extension pipe slide to the locating holes, the balls of the ball components will automatically get stuck in the locating holes due to elastic force of the reset spring to achieve fixation and location of the extension pipe mechanism; thus, the scooter is a fixed mechanism when folded or unfolded. The whole folding and unfolding operations are simple and fast.

Moreover, a safe locking device is arranged on the extension pipe mechanism. When the ball components fail under the unfolded state, the safe locking device can make sure the scooter will not retract and fold immediately. So, the safety and reliability of the extension pipe mechanism improve.

### Description of attached figures

The reinforced scooter folding device is further described in combination of attached figures and the embodiment as follows:
Fig.1 shows the structure diagram of the reinforced scooter folding device which extends to make the scooter unfolded;
Fig.2 shows local structure diagram of the reinforced scooter folding device which shortens to make the scooter folded;
Fig.3 shows the local structure diagram of the reinforced scooter folding device in the extension state;
Fig.4 shows transverse profile structure diagram of the reinforced scooter folding device;
Fig.5 shows longitudinal profile structure diagram of the reinforced scooter folding device.

### Specific mode of execution

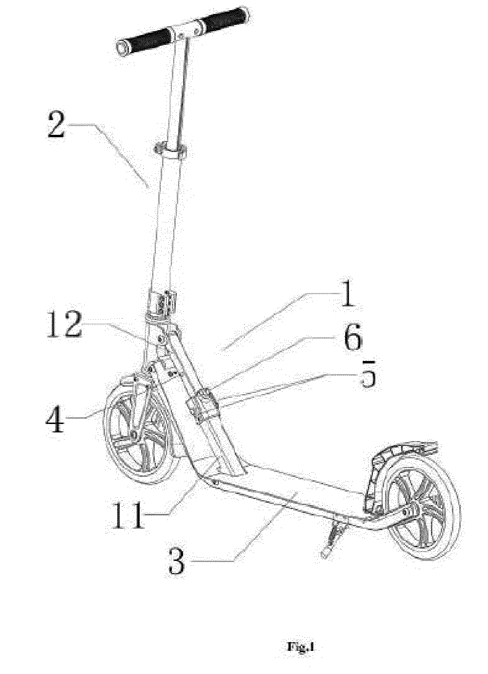

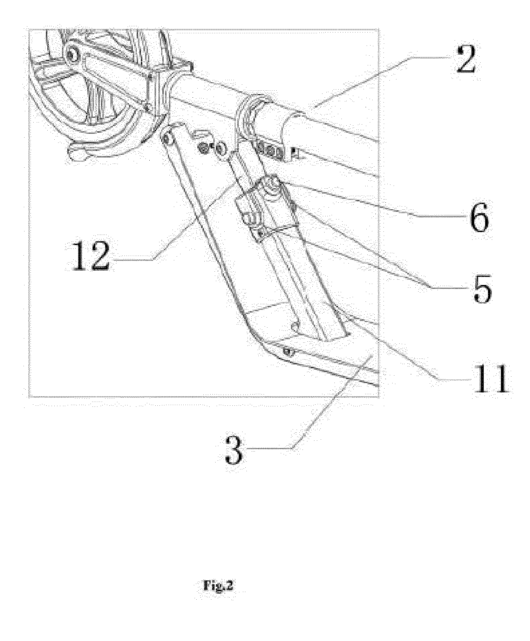

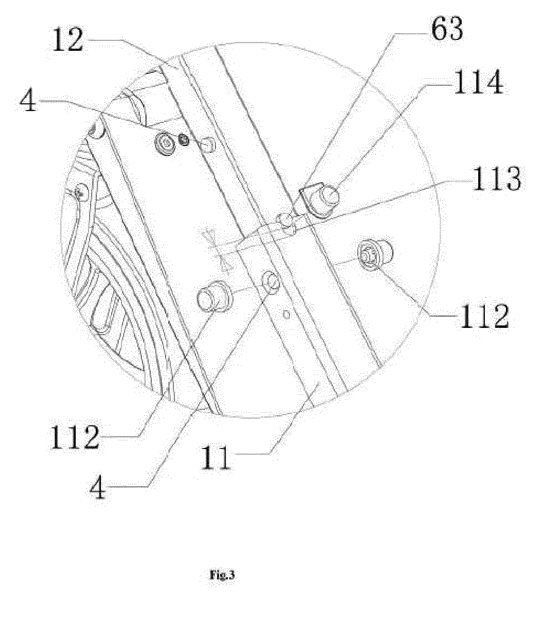

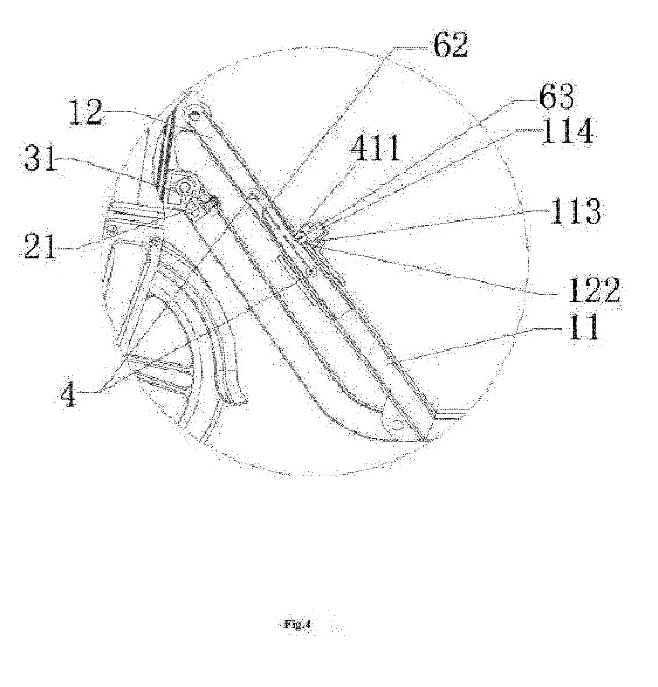

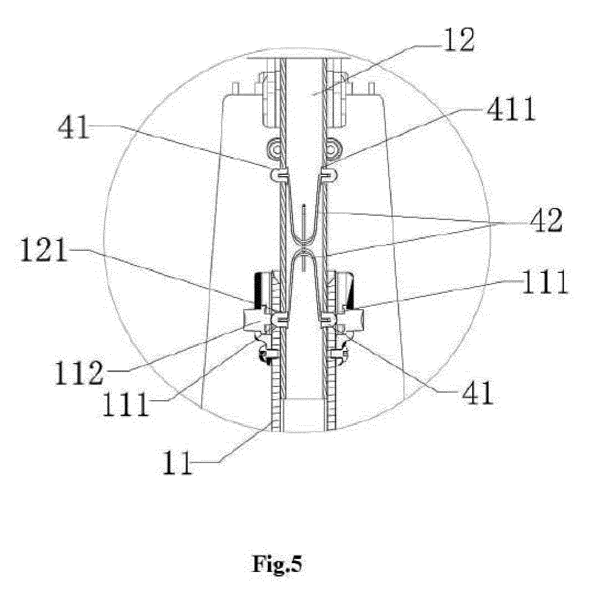

Referring to Fig.1-Fig.5, Fig.1-Fig.5 display structure diagrams of a specific embodiment. As shown in the figures, this utility model relates to a reinforced scooter folding device which comprises an extension pipe mechanism 1; one end of the extension pipe mechanism 1 is articulated with the middle and lower part of the head pipe 2; the other end of the extension pipe mechanism 1 is articulated with the middle and upper part of the baseboard 3 of the scooter; the lower part of the head pipe 2 of the scooter is articulated with the front part of the baseboard 3. Thus, the extension pipe mechanism 1, the head pipe 2 and the baseboard 3 are articulated mutually to form a triangle. The extension pipe mechanism 1 comprises a fixed pipe 11 and an extension pipe 12 cased in the fixed pipe 11; the extension pipe 12 can axially slide along the fixed pipe 11; two groups of the ball components 4 which can locate the fixed pipe 11 and the extension pipe 12 to the unfolded state and the folded state respectively are arranged on the extension pipe mechanism 1; the two groups of the ball components 4 are axially distributed on the side of the extension pipe 12 and have certain space. When the extension pipe mechanism 1 shortens or extends, the scooter can fold or unfold correspondingly, and the extension pipe mechanism 1 is located and fixed during shortening or extending by the two groups of the ball components 4; thus, folding and storage functions of the scooter are achieved; besides, it is convenient to carry the scooter.

As shown in the figures, the ball components 4 comprise a reset spring 42 and balls 41 at both sides of the extension pipe 12; locating holes 111 corresponding to the ball components 4 are arranged at both sides of the fixed pipe 11; ball holes 121 for corresponding balls 41 to extend are arranged at both sides of the extension pipe 12; the reset spring 42 is installed in the extension pipe 12, and both sides press the rear end face of two balls 41, respectively; when the extension pipe 12 slides to the location where the balls 41 correspond to the locating holes 111, the balls 41 will automatically get stuck in the locating holes 111 due to the elastic force of the reset spring 42; the fixed pipe 11 is provided with a button 112 on the locating holes 111; when the balls 41 slide into the locating holes 111, press down the button 112 and the balls 41 can slide off the locating holes 111.

Furthermore, as show in the figures, a safe locking device 6 is arranged on the extension pipe mechanism 1; the safe locking device 6 comprises a safe ball component mounted on the upside of the extension pipe 12; the safe ball component comprises a locking spring 62 and a safe ball 63 in the extension pipe 12; a safe ball hole 122 for the safe ball 63 to extend is arranged on the upside of the extension pipe 12; one end of the locking spring 62 presses the inner wall of the extension pipe 12, and the other end presses the tail of the safe ball 63; a slideway 113 corresponding to the safe ball 63 is arranged on the upside of the fixed pipe 11; when the extension pipe mechanism 1 extends to certain length, the safe ball 63 can slide off the safe ball hole 122 to the slideway 113 due to the elastic force of the locking spring 62; when the fixed pipe 11 and the extension pipe 12 are in the unfolded state, there is certain distance between the safe ball hole 122 and the bottom of the slideway 113; the fixed pipe 11 is provided with a safe button 114 on the slideway 113; when the safe ball 63 slides into the slideway 113, press down the safe button 114 and the safe ball 63 can slide off the slideway 113.

When the scooter is unused, it is in the folded state. When necessary to unfold the scooter, first press down the button 112 at both sides of the extension pipe mechanism 1 to make the balls 41 slide off the locating holes 111. When the balls 41 do not get stuck in the locating holes 111 in the fixed pipe 11, The extension pipe 12 can axially slide in the fixed pipe 11 freely; then, the head pipe 2 is overturned anticlockwise, and the extension pipe 12 is driven to extend; when the extension pipe 12 extends to certain length, the safe ball 63 first slides off the safe ball hole 122 to the slideway 113; the head pipe 2 is overturned continuously; when the extension pipe 12 slides to the location in need of extension, the balls 41 of the ball components 4 near the baseboard 3 correspond to the locating holes 111, and the balls 41 are pressed into the locating holes 111; at this moment, the scooter is unfolded and is of a fixed structure; the safe ball 63 have certain safe distance with the bottom of the slideway 113; when the ball components 4 fail, the safe locking device 6 can make sure the scooter will not retract and fold immediately; thus, the safety and reliability improve. When it is necessary to fold the scooter, press down the button 112 and the safe button 114 simultaneously; the head pipe 2 is overturned clockwise; when the extension pipe slides to the location in need of folding, the balls 41 of the ball components 4 near the head pipe 2 correspond to the locating holes 111, and the balls 41 are pressed into the locating holes 111; at this moment, the scooter is folded and is of a fixed structure. The whole folding and unfolding operations are simple and convenient.

In this utility model, the slideway 113 is of U-shaped hole with front end opened. In practical application, the slideway 113 can also be of a long and narrow hole without opening to achieve the function of two-way limit protection, which is not described in detail here.

What's more, as shown in the figures, the head of the balls 41 and the safe ball 63 is of hemispheric structure, and the tail is equipped with an annular ladder fixture block 411; the outer diameter of the annular ladder fixture block 411 is larger than that of its head so that the balls 41 and the safe ball 63 cannot completely slide off, which can prevent failure of the ball components 4 or the safe ball component due to excessive slide of the balls 41 and the safe ball 63 and improve the reliability and safety; the head of the balls 41 and the safe ball 63 is of hemispheric structure; thus, the balls 41 and the safe ball 63 do not need to slide into the extension pipe 12 completely, and only the part below the head needs to slide into the extension pipe 12; then the head pipe 2 is rotated to drive the extension pipe mechanism 1 to slide so as to press the balls 41 and the safe ball 63 into the extension pipe 12. In this way, the extension end of the button 12 or the safe button 14 can be a little short to avoid that the extension end of the button 112 or the safe button 114 gets stuck in the extension pipe 12 due to excessive press and to make it more convenient to operate the extension pipe mechanism 1.

As shown in the figures, a locating convex block 21 is arranged at the hinge joint between the head pipe 2 and the baseboard 3; a locating screw 31 corresponding to the locating convex block 21 is arranged on the baseboard 3; when the extension pipe 12 extends to the location where the balls 41 of the ball components 4 near the baseboard 3 correspond to the locating hotels 111, one end of the locating screw 31 presses the end face of the locating convex block 21 so that the extension pipe 12 will not slide off the fixed pipe 11 due to excessive extension, which further improves the reliability and safety of the extension pipe mechanism 1.

The above just describes a preferable embodiment of this utility model. The utility model can be changed correspondingly in practical applications. For example, the locating mechanism 5 and the safe locking device 6 can be designed to the pin location, latch location and other location modes which are not described in detail here.

Therefore, equivalent transformations or corresponding alterations made by the technical personnel who are familiar with this field under the precondition of no violation of the spirit of this invention should be within the protection scope of this utility model.

## Claims

1. Reinforced scooter folding device **characterized in that** it comprises an extension pipe mechanism (1); one end of the extension pipe mechanism (1) being articulated with the middle and lower part of the head pipe (2); the other end of the extension pipe mechanism (1) being articulated with the middle and upper part of the baseboard (3) of the scooter; the lower part of the head pipe (2) of the scooter being articulated with the front part of the baseboard (3); the extension pipe mechanism (1), the head pipe (2) and the baseboard (3) being articulated mutually to form a triangle.; the said extension pipe mechanism (1) comprising a fixed pipe (11) and an extension pipe (12) cased in the fixed pipe (11); the extension pipe (12) can axially slide along the fixed pipe (11); a locating mechanism (5) which can locate the fixed pipe (11) and the extension pipe (12) in the unfolded state and folded state respectively is mounted on the extension pipe mechanism (1); a safe locking device (6) which can facilitate the fixed pipe (11) and the extension pipe (12) in the unfolded state is arranged on the extension pipe mechanism (1).

2. Reinforced scooter folding device according to claim 1, wherein the locating mechanism (5) comprises two groups of ball components (4) mounted on the side of the extension pipe (12); the two groups of the ball components (4) being distributed axially on the side of the extension pipe (12) and having certain space.

3. Reinforced scooter folding device according to claim 2, wherein the ball components (4) comprise a reset spring (42) and balls 41 at both sides of the extension pipe (12); locating holes (111) corresponding to the ball components (4) are arranged at both sides of the fixed pipe (11); ball holes (121) for corresponding balls (41) to extend are arranged at both sides of the extension pipe (12) so that the balls (41) can slide off and get stuck in the locating holes (111) of the fixed pipe (11).

4. Reinforced scooter folding device according to claim 3, wherein the reset spring (42) is installed in the extension pipe (12), and both sides press the rear end face of two balls (41), respectively; when the extension pipe (12) slides to the location where the balls (41) correspond to the locating holes (111), the balls (41) will automatically get stuck in the locating holes (111) due to the elastic force of the reset spring (42).

5. Reinforced scooter folding device according to claim 4, wherein the fixed pipe (11) is provided with a button (112) on locating holes (111); when the balls (41) slide into locating holes (111), press down the button (112) and the balls (41) can slide off the locating holes (111).

6. Reinforced scooter folding device according to claim 5, wherein the safe locking device (6) comprises a safe ball component mounted on the upside of the extension pipe (12); the safe ball component comprises a locking spring (62) and a safe ball (63) in the extension pipe (12); a safe ball hole (122) for the safe ball (63) to extend is arranged on the upside of the extension pipe (12); one end of the locking spring (62) presses the inner wall of the extension pipe (12), and the other end presses the tail of the safe ball (63); a slideway (113) corresponding to the safe ball (63) is arranged on the upside of the fixed pipe (11); when the extension pipe mechanism (1) extends to certain length, the safe ball (63) can slide off the safe ball hole (122) to the slideway (113); when the fixed pipe (11) and the extension pipe (12) are in the unfolded state, there is certain distance between the safe ball hole (122) and the bottom of the slideway (113).

7. Reinforced scooter folding device according to claim 6, wherein the fixed pipe (11) is provided with a safe button (114) on the slideway (113); when the safe ball (63) slides into the slideway (113), press down the safe button (114) and the safe ball (63) can slide off the slideway (113).

8. Reinforced scooter folding device according to claim 7, wherein the head of the balls (41) and the safe ball (63) are of hemispheric structure, and the tail is equipped with an annular ladder fixture block (411).

9. Reinforced scooter folding device according to claim 1, wherein a locating convex block (21) is arranged at the hinge joint between the head pipe (2) and the baseboard (3); a locating screw (31) corresponding to the locating convex block (21) is arranged on the baseboard (3); when the extension pipe (12) extends to the location in need of extension, one end of the locating screw (31) presses the end face of the locating convex block (21).
